# EUROPÄISCHE PATENTSCHRIFT

(11) **EP 0 955 230 B1**
(45) Veröffentlichungstag und Bekanntmachung des Hinweises auf die Patenterteilung: **11.01.2006**
(21) Anmeldenummer: 99108827.9
(22) Anmeldetag: 04.05.1999
(51) Int. Cl.: B62D 33/067

(54) **Arbeitsfahrzeug mit kippbarer Fahrerplattform und Kippvorrichtung**
Working vehicle with tilting operator platform and lifting mechanism
Véhicule utilitaire avec plate-forme de conduite basculante et mécanisme de basculement

(30) Priorität: 07.05.1998 DE 19820377
(43) Veröffentlichungstag der Anmeldung: 10.11.1999
(73) Patentinhaber: DEERE & COMPANY, Moline, Illinois 61265-8098 (US)
(72) Erfinder: Thompson, Graham, Waterloo, IA 50701 (US); Dimitrijevic, Milan, 68159 Mannheim (DE)
(74) Vertreter: Lau-Loskill, Philipp

(56) Entgegenhaltungen:
- DE-A- 3 007 074
- US-A- 5 368 118
- PATENT ABSTRACTS OF JAPAN vol. 007, no. 169 (M-231), 26. Juli 1983 (1983-07-26) & JP 58 074857 A (ISUZU JIDOSHA KK), 6. Mai 1983 (1983-05-06)

## Beschreibung

Die Erfindung bezieht sich auf ein landwirtschaftliches oder industrielles Arbeitsfahrzeug mit einem Fahrzeugrumpf, einer Fahrerplattform und wenigstens einer Kippvorrichtung, durch die die Fahrerplattform auf dem Arbeitsfahrzeug um eine im wesentlichen horizontale Kippachse verkippbar ist und die wenigstens zwei unterschiedlich lange und/oder nicht parallel ausgerichtete Lenker aufweist, die jeweils einenends an der Fahrerplattform und anderenends an dem Fahrzeugrumpf angelenkt sind, wobei die jeweiligen Anlenkachsen der Lenker im wesentlichen parallel miteinander ausgerichtet und zueinander beabstandet sind. Die Erfindung bezieht sich desweiteren auf eine Kippvorrichtung für eine Fahrerplattform.

Fahrerplattformen mit oder ohne Kabine lassen sich an landwirtschaftlichen und industriellen Fahrzeugen kippbar oder abnehmbar montieren, um einen Zugang für Wartung, Reparatur, Austausch oder Reinigung von Fahrzeugkomponenten zu ermöglichen, die unter der Fahrerplattform angeordnet sind. Da zum Kippen oder Abnehmen der Fahrerplattform üblicherweise Kräne oder Flaschenzüge notwendig sind, müssen die genannten Arbeiten meist in Hallen oder aber an Plätzen, die mit solchen Vorrichtungen ausgestattet sind, durchgeführt werden. Oftmals ist auch eine Demontage von weiteren Bauteilen notwendig, um ein Kippen überhaupt möglich zu machen. Die in der EP-A-0 422 489 angegebene Lösung erfordert beispielsweise zum seitlichen Kippen der Fahrerplattform die Demontage eines Hinterrades.

Die DE-OS-30 07 074 zeigt einen land- und/oder bauwirtschaftlich nutzbaren Schlepper mit einem zwei Unterlenker aufweisenden Kraftheber und einer bei Nichtgebrauch abbaubaren und an einem Lagerort aufzubewahrenden Fahrerkabine. Die Kabine wird zum Abbauen mittels einer Schubstange um eine Schwenkachse, die sich am rückwärtigen Schlepperende befindet, verschwenkt. Die Schubstange ist einerseits an einem sich in unterster Stellung befindlichen Hubarm des Krafthebers angelenkt und andererseits an einem mit der Fahrerkabine starr verbundenen Schwenkhebel befestigt. Beim Hochfahren des Hubarmes in die oberste Stellung wird die Fahrerkabine nur so weit geschwenkt, daß ihr Schwerpunkt sich noch vor der Schwenkachse befindet. Aus dieser Zwischenstellung kann die Fahrerkabine manuell in eine Ablagestellung an einen geeigneten Lagerort gebracht werden. Bei dieser Anordnung ist nicht vorgesehen, die Kabine in einer gekippten Position zu halten. Dies hat den Nachteil, daß die Kabine immer komplett abzunehmen und an einen geeigneten Lagerort abzulegen ist. Die eigentliche Fahrerplattform mit Bedienkomponenten und Fahrersitz verbleibt auf dem Schlepper. Dies ist zur Durchführung von Wartungs- und Reparaturarbeiten nicht zwingend erforderlich.

Das Verkippen von Fahrerplattformen bzw. Kabinen um eine horizontale Kippachse ist auch bei Lastkraftwagen bekannt. Hier wird die Fahrerplattform nach vorn verkippt. So wird beispielsweise in der DE-C-39 28 945 eine Kippvorrichtung für mit einer Abfederung versehene Fahrerhäuser von Nutzfahrzeugen beschrieben, bei der zwei im wesentlichen übereinander liegende horizontal ausgerichtete Lenker unterschiedlicher Länge vorgesehen sind, die jeweils einenends an dem Fahrzeugrahmen und anderenends an dem Fahrerhaus um quer zur Fahrtrichtung verlaufende Schwenkachsen schwenkbar gelagert sind, um eine viergliedrige kinematische Kette mit Zwangsführung für das Fahrerhaus zu bilden. An dem Fahrerhaus greift ein Kippzylinder an, der sich an dem Fahrzeugrahmen abstützt und dem Verkippen des Fahrerhauses dient. Derartige Ausführungen sind bei landwirtschaftlichen oder industriellen Fahrzeugen, deren Fahrerplattform im hinteren Fahrzeugbereich angeordnet ist, nicht einsetzbar. Dies gilt insbesondere dann, wenn sich im Heckbereich der Fahrzeuge Anbauvorrichtungen befinden, die die Kippbewegung behindern können. Es ist auch zu berücksichtigen, daß keine Baugruppen, wie beispielsweise die Kotflügel, den Kippvorgang behindern dürfen.

Ein Arbeitsfahrzeug bzw. eine Kippvorrichtung mit den Merkmalen der jeweiligen Oberbegriffe der Patentansprüche 1 und 11 ist beispielsweise aus der US 5,368,118 bekannt. Mit der dort vorgesehenen Kippvorrichtung kann die Fahrzeugkabine jedoch nur um einen kleinen Winkel gegenüber des Fahrzeugrumpfs verkippt werden.

Aufgabe der Erfindung ist es, ein Arbeitsfahrzeug der eingangs genannten Art derart auszubilden, daß unter Vermeidung der genannten Nachteile und Probleme mit einfachen Mitteln ein Verkippen der Fahrerplattform insbesondere für Wartungs- und Reparatur- und Montagezwecke möglich ist. Ferner soll eine Kippvorrichtung angegeben werden, die aus wenigen, kostengünstig herstellbaren Bauteilen besteht und sich leicht montieren läßt. Dabei soll es mit einfachen Maßnahmen möglich sein, die Kippvorrichtung entsprechend der vorliegenden räumlichen Verhältnisse auszubilden, so daß ein freies Kippen der Fahrerplattform möglich ist, ohne daß Fahrzeugteile und Anbauvorrichtungen in der Kippbahn liegen und den Kippvorgang behindern.

Die Aufgabe wird erfindungsgemäß durch die Lehren der Patentansprüche 1 und 11 gelöst. Weitere vorteilhafte Ausgestaltungen und Weiterbildungen der Erfindung gehen aus den Unteransprüchen hervor.

Das landwirtschaftliche oder industrielle Arbeitsfahrzeug weist einen Fahrzeugrumpf, eine Fahrerplattform und wenigstens eine Kippvorrichtung auf, durch die die Fahrerplattform auf dem Arbeitsfahrzeug um eine im wesentlichen horizontale Kippachse verkippbar ist, um für Wartungs- oder Reparaturarbeiten Zugang zu unter der Fahrerplattform befindliche Fahrzeugkomponenten zu gewinnen. Unter die Bezeichnungen Fahrzeugrumpf und Fahrerplattform sollen hierbei alle Bauteile fallen, die dauerhaft oder zum Zweck des Kippens starr mit dem Fahrzeugrumpf bzw. der Fahrerplattform verbunden sind. Die Kippvorrichtung weist wenigstens zwei unterschiedlich lange und/oder nicht parallel ausgerichtete Lenker auf, die jeweils einenends an der Fahrerplattform und anderenends an dem Fahrzeugrumpf angelenkt sind, wobei die jeweiligen Anlenkachsen der Lenker im wesentlichen parallel miteinander ausgerichtet und voneinander beabstandet sind.

Arbeitsfahrzeuge sind häufig mit einer Anbauvorrichtung versehen, an die zusätzliche Geräte oder Lasten angehängt oder angebaut werden können. Übliche Anbauvorrichtungen weisen zwei hydraulisch betätigbare Hubarme auf, die am Fahrzeugrumpf angelenkt sind und durch die zugehörigen Unterlenker angehoben und abgesenkt werden können. Erfindungsgemäß dient ein solcher Hubarm als erster Lenker und weist eine Anlenkstelle auf, über die er an der Fahrerplattform oder einem an der Fahrerplattform befestigbaren Bauteil anlenkbar ist. Durch den Einsatz des Hubarms als ersten Lenker der Kippvorrichtung kann ein vorhandenes Bauteil (Hubarm) für eine zweite Funktion genutzt werden, so daß die Anzahl der für die Kippvorrichtung am Arbeitsfahrzeug anzubringenden Teile reduziert wird.

Das erfindungsgemäß ausgebildete Arbeitsfahrzeug bzw. die Kippvorrichtung ermöglicht ein schnelles, problemloses Kippen der Fahrerplattform oder der Fahrzeugkabine mit einfachen Mitteln. Es ist für das Kippen nicht erforderlich, weitere Komponenten des Fahrzeugs, wie beispielsweise ein Hinterrad, zu demontieren. Da keine Kräne oder Flaschenzüge erforderlich sind, braucht das Verkippen nicht in einer Werkstatt zu erfolgen, sondern kann, falls dies gewünscht wird, auch an beliebigem Ort, beispielsweise auf dem Acker, durchgeführt werden. Die Kabine läßt sich in ihrer gekippten Stellung arretieren. Ein ausreichender Zugang zu den unter der Fahrerplattform angeordneten Fahrzeugkomponenten ist dabei gewährleistet. Der ermöglichte Kippwinkel und die Kipphöhe erlauben es, daß alle Fahrzeugsysteme angeschlossen und betriebsbereit bleiben können. Beispielsweise lassen sich Leitungen für die Klimaanlage, die Heizung, die Lenkung, die Bremsen, für Hydraulikkomponenten und weitere elektrische und hydraulische Leitungen so auslegen und verlegen, daß sie bei Kippen nicht getrennt zu werden brauchen. Die Leitungen können im hinteren Bereich des Fahrzeugs geführt werden und eine hinreichende Flexibilität aufweisen, so daß sie das Verkippen über den vollen Kippwinkel ermöglichen.

Die beiden Lenker wirken dabei im Sinne eines Gelenkvierecks zusammen, so daß beim Kippen der Fahrerplattform eine Schwenkbewegung von einer Verschiebebewegung überlagert wird.

Durch die Festlegung der Längen, Ausrichtung und Lage der Anlenkachsen der Lenker läßt sich die Schwenkbahn und der mögliche Schwenkwinkelbereich der Fahrerplattform in weiten Grenzen variieren und an die räumlichen Gegebenheiten anpassen. Die daraus resultierende Kippbewegung ermöglicht, daß während des gesamten Kippvorgangs ein ausreichender Abstand zwischen der Fahrerplattform und weiteren Baugruppen des Arbeitsfahrzeugs gewährleistet wird. Besonders vorteilhaft ist dies, wenn Kotschützer für rückwärtige Reifen des Arbeitsfahrzeugs an der Fahrerplattform befestigt sind. Beim Verkippen der Fahrerplattform ist bei einer erfindungsgemäßen Anordnung sichergestellt, daß die Kotschützer nicht mit den Reifen zusammenstoßen, so daß ein Kippen möglich ist, ohne die Reifen abzubauen. Die Kippbewegung der Fahrerplattform läßt sich als ein Kippen um einen imaginären Drehpunkt beschreiben, dessen Lage sich während des Kippvorganges ständig verändert und sich als Schnittpunkt von gedachten Verlängerungen der Lenker ergibt. Wird der Schwenkwinkel durch die Wahl der Lenkerlängen und Lenkeranlenkpunkte so begrenzt, daß der Schwerpunkt der Fahrerplattform nicht nach außen über die Schwenkachse hinaus wandert, so können zum Aufkippen auch einseitig wirkende Hydraulikzylinder verwendet werden, weil das Gewicht der Fahrerplattform diese wieder in ihre Ausgangslage bringt.

Da die Kippvorrichtung als solche aus wenigen und einfachen Bauteilen besteht, ist sie kostengünstig und leicht herzustellen. Darüber hinaus ist ein einfacher An- und Abbau der Kippvorrichtung an das Arbeitsfahrzeug und an die Fahrerplattform möglich, da hierzu nur die beiden Lenker mit dem Fahrzeugrumpf bzw. der Fahrerplattform verbunden werden müssen. Es ist auch möglich, daß die Lenker nicht direkt an der Fahrerplattform bzw. an dem Fahrzeugrumpf, sondern über weitere, an der Fahrerplattform bzw. an dem Fahrzeugrumpf befestigte Bauteile angeschlossen sind.

Das genannte Arbeitsfahrzeug ist vorzugsweise ein landwirtschaftlicher Schlepper. Es ist aber auch denkbar, daß die Erfindung an anderen landwirtschaftlichen Fahrzeugen, wie beispielsweise Mähdreschern, Feldhäckslern und anderen Erntemaschinen, an System-Schleppern, Universalschleppern oder an industriellen Fahrzeugen wie Ladern, Baggern oder Kränen eingesetzt wird.

Wesentlich erleichtert wird das Verkippen der meist sehr schweren Fahrerplattform durch einen Kraftmotor, der zwischen zwei Elementen des Gelenkvierecks (Fahrzeugrumpf, Lenker, Hubarm, Fahrerplattform) angeordnet ist, um diese gegeneinander zu bewegen. Dieser Kraftmotor kann ausschließlich für den Antrieb der Kippvorrichtung vorgesehen sein. Besonders vorteilhaft ist es jedoch, einen aber bereits für andere Zwecke am Arbeitsfahrzeug angebrachten Kraftmoto auch für das Kippen zu nutzen.

Der Kraftmotor kann dabei einenends an dem Fahrzeugrumpf und anderenends an dem Hubarm angreifen. Der Kraftmotor kann beispielsweise ein Linearantrieb wie ein Hydraulikmotor, ein Spindelantrieb oder auch ein Elektromotor etc. sein.

Vorzugsweise ist der Kraftmocor als Hydraulikmotor ausgebildet. Die erforderliche Hydraulikdruckquelle ist bei landwirtschaftlichen und industriellen Arbeitsfahrzeugen häufig zur Versorgung anderer Abnehmer wie Lenkung, Hydraulikbremse oder ähnlichem bereits vorhanden. Es kann aber auch vorgesehen werden, daß der Hydraulikmotor durch eine vom Fahrzeug unabhängige, externe Druckquelle, beispielsweise eine Handpumpe, ein Hydraulikdruckreservoir oder eine elektrisch angetriebene externe Hydraulikpumpe, versorgt wird. Bei einer externen Druckversorgung muß das Arbeitsfahrzeug nicht mit einer eigenen Druckquelle ausgerüstet sein, um die Fahrerplattform zu verkippen. Darüber hinaus ist das Verkippen auch möglich, wenn die Fahrzeug-Druckquelle außer Betrieb ist, was bei abgeschaltetem oder defektem Arbeitsfahrzeug der Fall sein kann.

Der Hydraulikmotor kann als einfach oder doppelt wirkende Kolben-Zylinder-Einheit ausgeführt werden. Bei einer externen Druckversorgung eines einfach wirkenden Hxdraulikmotors erfolgt das Absenken der Fahrerplattform, indem die Verbindung zwischen Druckquelle und Hydraulikmotor unterbrochen wird. Das Entweichen des Hydraulikmediums erfolgt über eine Drossel, so daß ein gleichmäßiges und nicht zu schnelles Absenken der Fahrerplattform erreicht werden kann.

An dem Arbeitsfahrzeug können desweiteren Sicherheitsvorrichtungen vorgesehen sein, die ein plötzliches unkontrolliertes Absenken der Fahrerplattform verhindern. Hierzu können beispielsweise wirkungsmäßig parallel zu dem Hydraulikmotor eine oder mehrere Stützstangen vorgesehen sein, die als ineinander schiebbare Profile ausgeführt werden können, und einenends mit dem Fahrzeugrumpf und anderenends mit der Fahrerplattform oder mit Bauteilen, die mit diesen beiden Fahrzeugbaugruppen in Verbindungen stehen, verbunden sind. Zum Sichern der Fahrerplattform sind in den Profilen fluchtende Bohrungen vorgesehen. Durch Absteckbolzen können die Profile gegen ein Verschieben gesichert werden, wenn die Fahrerplattform ihre gewünschte Arbeitsposition eingenommen hat.

Es ist von Vorteil, wenn die Achse der Anlenkstelle zwischen Kraftmotor bzw. Hydraulikmotor und dem Hubarm mit der Achse der Anlenkstelle zwischen Fahrerplattform und dem Hubarm fluchtet, so daß diese verschiedenen Bauteile durch ein gemeinsames, die Anlenkstellen bildendes Element, wie beispielsweise einen einfachen Bolzen, verbunden werden können.

Der Hubarm wird üblicherweise durch einen Hubzylinder verschwenkt. Dieser kann als Kraftmotor zum Antrieb der Kippvorrichtung genutzt werden, so daß in besonders vorteilhafter Weise ein bereits am Fahrzeug vorhandenes Bauelement zum Kippen mit verwendet werden kann. Der Hubzylinder ist häufig eine einfach wirkende Kolben-Zylinder-Anordnung, die über eine Hubwelle zwei Hubarme betätigt.

An einem freien Ende des Hubarms ist eine Hubstange oder Hubspindel angelenkt, die dem Anheben von Unterlenkern dient. Zusammen mit einem weiteren am Fahrzeugrumpf angelenkten Oberlenker bilden diese eine Dreipunkt-Anhängevorrichtung (siehe beispielsweise ISO 730-1). Die Anlenkstelle für die Fahrerplattform befindet sich in einem mittleren Bereich des Hubarms, während die Hubstange bzw. Hubspindel an dem freien Ende des Hubarms angreift. Auch der Kraftmotor, der bei einer bevorzugten Ausführungsform durch den Hubzylinder der Anhängevorrichtung gebildet wird, kann in dem genannten mittleren Bereich des Hubarms der Anbauvorrichtung angreifen, derart, daß ein gemeinsamer Bolzen einerseits den Hubzylinder und andererseits die Fahrerplattform mit dem Hubarm gelenkig verbindet. Da die Verbindung zwischen Hubarm und Hubzylinder bei bekannten Anbauvorrichtungen bereits über Bolzen erfolgt, kann für die Ausgestaltung mit Kippvorrichtung in einfacher Weise ein verlängerter Bolzen eingesetzt werden.

Um die horizontale Kippachse in einen möglichst rückwärtigen Fahrzeugbereich oder sogar in einen Bereich außerhalb des Fahrzeugs zu verlegen, wird in vorteilhafter Weise an der Fahrerplattform je Kippvorrichtung eine sich im wesentlichen horizontal erstreckende Strebe befestigt. Der Hubarm ist in einem mittleren Bereich und ein zweiter Lenker im Bereich des freien Endes der Strebe anlenkbar. Durch eine solche Auslegung der Kippachse läßt sich bei einem verhältnismäßig geringen Kippwinkel der Fahrerplattform eine gute Zugänglichkeit der darunter liegenden Bauelemente erreichen. Bevorzugte Kippwinkel liegen zwischen 20° und 55°. Kleine Kippwinkel sind zu Wartungszwecken oder zum Austausch kleiner Einheiten oftmals ausreichend, so daß nur für größere Reparaturen oder für aufwendige Wartungsarbeiten ein vollständiges Kippen der Fahrerplattform erforderlich ist.

Die an der Fahrerplattform befestigbaren Streben sind als Profilstangen ausgebildet. Diese können auf einfache Weise in entsprechend ausgebildete Profilelemente des Rahmens der Fahrerplattform eingesteckt und an diesen befestigt werden.

Aufwendige Verbindungs- und Befestigungsmittel werden dadurch vermieden.

Bedingt durch das große Gewicht der Fahrerplattform wird vorzugsweise auf jeder Seite des Arbeitsfahrzeugs eine Kippvorrichtung vorgesehen. Die sich entsprechenden Anlenkachsen der Lenker fluchten miteinander. Hierbei können die bereits erwähnten Hubarme bekannter Anbauvorrichtungen genutzt werden, die auf einer gemeinsamen Hubwelle verschwenkbar gelagert sind. Im mittleren Bereich jedes Hubarmes ist ein Hydraulikmotor angelenkt, wobei diese Hydraulikmotoren von einer gemeinsamen Druckquelle mit Hydraulikdruck versorgt werden.

Eine erfindungsgemäße Kippvorrichtung für die Fahrerplattform eines landwirtschaftlichen oder industriellen Arbeitsfahrzeugs weist mindestens eine Strebe und einen Lenker auf. Die Strebe ist mit dem Lenker drehbar und mit der Fahrerplattform starr verbindbar. Darüber hinaus weist die Strebe Mittel zur Anlenkung eines Kraftmotors und eines Hubarms auf, der am Fahrzeugrumpf verschwenkbar angelenkt ist. Eine solche Kippvorrichtung kann an dem Fahrzeug dauerhaft angebracht sein. Besonders vorteilhaft ist es aber, wenn die Kippvorrichtung zum Verkippen der Fahrerplattform schnell und einfach an dem Arbeitsfahrzeug angebracht und nach Abschluß von Wartungs- und Reparaturarbeiten ebenso abgebaut werden kann, so daß die Kippvorrichtung den normalen Arbeitseinsatz des Fahrzeugs nicht behindert und auch bei rauhen Einsatzbedingungen nicht beschädigt wird. Die Kippvorrichtung läßt sich derart ausbilden, daß sich die Lage der Anlenkpunkte verändern läßt. Dadurch ist eine Anpassung an verschiedene Fahrzeug- bzw. Modelltypen mit abweichenden Abmessungen möglich. Die Anlenkpunkte können durch verschiebbare oder auswechselbare Halter oder andere an der Strebe bzw. den Lenkern lösbar angebrachte Teile gebildet werden.

Wenn der Kraftmotor und der Hubarm Bestandteile einer am Arbeitsfahrzeug angebrachten oder anbringbaren Anbauvorrichtung sind, reduziert sich die Zahl der an- bzw. abzubauenden Teile der Kippvorrichtung erheblich.

Ein besonders einfacher Anbau der Kippvorrichtung an die Fahrerplattform ergibt sich, wenn die Strebe als Profilstange ausgebildet ist, die in ein entsprechend ausgebildetes Profilelement des Rahmens der Fahrzeugplattform ohne Zuhilfenahme von Zwischenelementen einsteckbar und befestigbar ist.

Der Lenker ist mit dem freien Ende der Strebe drehbar verbindbar. Die Mittel zur Anlenkung des Kraftmotors und des Hubarms sind in einem mittleren Bereich der Strebe vorgesehen. Wie bereits beschrieben, wird dadurch die Kippachse der Fahrerplattform günstig beeinflußt.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine Seitenansicht eines erfindungsgemäßen Fahrzeugs mit einer kippbaren Fahrerplattform und einer Kippvorrichtung in normaler Position und in komplett gekippter Position (unterbrochene Darstellung) und
- Fig. 2: eine schematische Seitenansicht einer erfindungsgemäßen Kippvorrichtung in ihrer Ausgangsstellung (durchgezogene Linien) und in mehreren gekippten Stellungen (unterbrochene Linien).

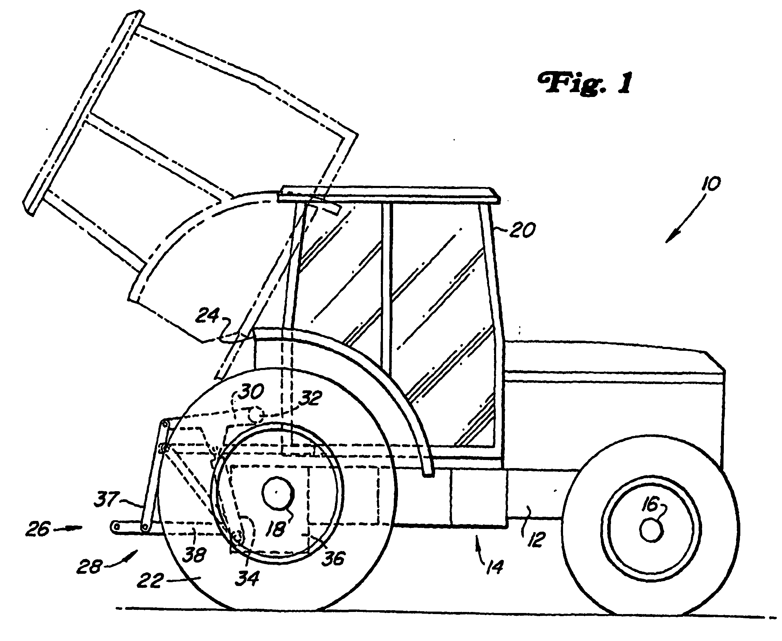

Bei dem in Fig. 1 dargestellten Fahrzeug 10 handelt es sich um einen Ackerschlepper. Dieser weist einen Rahmen 12 auf, in den verschiedene nicht gezeigte bzw. nur angedeutete Fahrzeugkomponenten wie Motor und Getriebe 14 eingesetzt sind. An dem Rahmen 12 sind darüber hinaus eine Vorderachse 16 und eine Hinterachse 18 angebracht. Im Bereich der Hinterachse 18 ist auf den Rahmen 12 eine Fahrerplattform 20 in Form einer Kabine aufgesetzt. An der Fahrerplattform 20 sind auf beiden Seiten des Fahrzeugs 10 Kotflügel 24 befestigt.

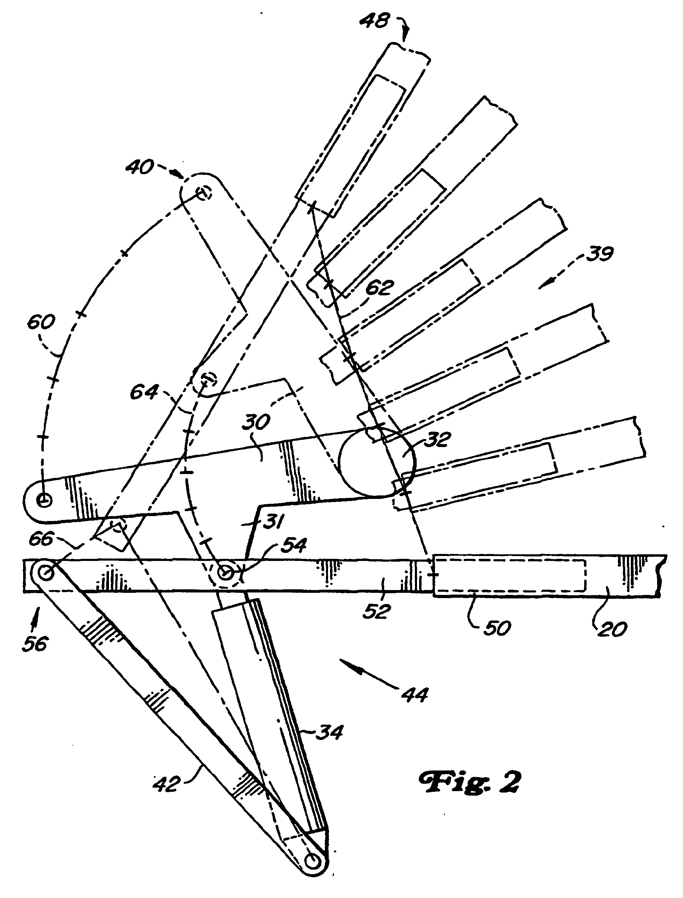

An der bezogen auf die Fahrtrichtung rückwärtigen Seite 26 des Fahrzeugs 10 ist eine Anhängevorrichtung 28 zum Anbringen von nicht gezeigten Zusatzgeräten vorgesehen. Da die Anhängevorrichtung 28 bezogen auf eine Längs-Mittelachse des Fahrzeugs 10 symmetrisch ausgebildet ist, werden im folgenden nur ihre auf der rechten Seite liegenden Komponenten näher beschrieben. Die Anhängevorrichtung 28 weist einen ersten Lenker bzw. Hubarm 30 auf, der um eine Hubwelle 32 verschwenkbar gelagert ist. An einem mittleren Bereich des Hubarms 30 ist ein Seitenschenkel 31 vorgesehen, an dem ein Kraftmotor 34 in Form einer einfach wirkenden Kolben-Zylinder-Anordnung durch eine Bolzenverbindung angelenkt ist. Mit seinem anderen Ende ist der Kraftmotor 34 an einem Differentialgehäuse, das Teil des Fahrzeugrümpfs 36 des Arbeitsfahrzeugs 10 ist, gelenkig angeschlossen. Die Unterlenker 38 und die Hubstangen 37 der Anhängevorrichtung sind in üblicher Weise ausgeführt. Der Oberlenker ist der besseren Übersichtlichkeit halber in der Zeichnung nicht näher dargestellt. Wie in Fig. 2 gezeigt, bewegt sich der Hubarm 30, wenn der Hydraulikmotor 34 ausgefahren wird, aus einer unteren Ausgangsstellung über mehrere Zwischenstellungen in eine obere Endstellung 40.

Die Fahrerplattform 20 weist einen Rahmen aus Vierkantprofilen auf. Die beiden in Fahrzeuglängsrichtung ausgerichteten seitlichen, unteren Profile des Rahmens sind nach hinten offen. In diese Profilöffnungen ist je eine als Profilstange ausgebildete Strebe 52 eingesteckt, deren Außenprofil dem Profil der Profilöffnung angepaßt ist. Die Streben 52 lassen sich im Bedarfsfall auf einfache Weise an dem Rahmen montieren bzw. demontieren. Zur Sicherung der Streben 52 an dem Rahmen können übliche, nicht näher dargestellte Bolzenverbindung dienen.

An einer Anlenkstelle 56 an dem freien, nach hinten ragenden Ende jeder Strebe 52 greift ein Ende einer Schwinge 42 gelenkig an. Die Gelenkstelle kann als einfach montierbare und demontierbare Bolzenverbindung ausgebildet sein, bei der die Strebe 52 und die Schwinge 42 je eine zugehörige Bohrung aufweisen, durch die ein durch geeignete Sicherungselemente gesicherter Bolzen gesteckt wird. Das andere Ende der Schwinge 42 ist gelenkig am Differentialgehäuse 36 befestigt. Auch für diese Gelenkstelle kann eine Bolzenverbindung vorgesehen sein, bei der am Differentialgehäuse 36 ein Bolzen befestigbar ist, der durch eine Bohrung in der Schwinge 42 gesteckt wird und eine einfache Montage und Demontage der Schwinge 42 ermöglicht. Bevorzugt wird ein Bolzen genutzt, der üblicherweise die Anlenkstelle zwischen dem Hydraulikmotor 34 und dem Differentialgehäuse 36 bildet. Dabei muß gegebenenfalls der bisher verwendete Bolzen durch einen längeren Bolzen ersetzt werden, so daß sich an ihm zusätzlich die Schwinge 42 montieren läßt.

Der mittlere Bereich der Strebe 52 ist über eine Gelenkstelle 54 mit dem nach unten vorstehenden Seitenschenkel 31 des Hubarms 30 verbunden. Hierfür weist die Strebe 52 eine Bohrung auf, die einen Bolzen aufnimmt. Es handelt sich bei dem Bolzen um denselben Bolzen, der der gelenkigen Verbindung zwischen Hubarm 30 und Hydraulikmotor 34 dient. Gegenüber bisher üblichen Bolzen wird hier ein verlängerter Bolzen verwendet, der durch die Bohrung der Strebe 52 greift. Durch geeignete, schnell lösbare Sicherungselemente wird die Verbindung zwischen Bolzen und Strebe 52 gesichert.

Solange die beiden Streben 52 und die beiden Schwingen 42 nicht am Fahrzeug 10 montiert sind, so unterscheidet sich das Fahrzeug 10 nicht nennenswert von einem üblichen Ackerschlepper mit Anhängevorrichtung. Für ein Verkippen der Fahrerplattform 20 werden die Streben 52 und Schwingen 42 in der dargestellten und beschriebenen Weise am Fahrzeug montiert. Ferner werden Befestigungselemente, die die Fahrerplattform 20 auf dem Fahrzeugrumpf 36 sichern, gelöst. Wenn nun die Kraftmotoren 34 mit Hydraulikflüssigkeit beaufschlagt und ausgefahren werden, hebt sich der vordere Teil der Fahrerplattform 20 vom Fahrzeugrumpf 36 ab und ermöglicht einen Zugang zu unter der Fahrerplattform 20 liegenden Fahrzeugkomponenten.

Die Streben 52, die Schwingen 42 und eine elektrische oder handbetriebene externe Hydraulikpumpe können als Montagesatz bereitgehalten werden, um im Bedarfsfall an dem Fahrzeug montiert zu werden und die Fahrerplattform 20 zu verkippen. Für den hydraulischen Anschluß der Hydraulikpumpe kann in dem Hydraulikreis der Kraftmotoren 34 ein T-Stück vorgesehen sein, dessen mittlerer Anschluß über ein Absperrventil mit einem Hydraulikkuppler verbunden ist.

Es sei hervorgehoben, daß die zwischen der Fahrerplattform 20 und dem Fahrzeugrumpf 36 verlaufenden elektrischen und hydraulischen Verbindungsleitungen und mechanischen Verbindungsgestänge gegebenenfalls vor dem Verkippen gelöst werden müssen.

Es ist jedoch von besonderem Vorteil, die Bremsleitungen, Lenkleitungen, Heizleitungen, Leitungen einer Klimaanlage und weitere elektrische und hydraulische Leitungen sowie gegebenenfalls Verbindungsgestänge so auszulegen und anzuordnen, daß sie beim Verkippen nicht gelöst werden müssen. Hierzu können insbesondere die Leitungen im hinteren Bereich der Fahrerplattform 20 wenigstens abschnittweise quer zur Fahrtrichtung verlegt werden. Das Nichtlösen der Verbindungen hat neben einem geringen Montageaufwand den Vorteil, daß die Antriebsmaschine auch bei gekippter Fahrerplattform 20 betrieben werden kann. Damit kann auch eine Hydraulikpumpe angetrieben werden, die die Kraftmotoren 34 mit Hydraulikflüssigkeit versorgen.

Der Hubarm 30 der Anhängevorrichtung 28 bildet zusammen mit einem zweiten Lenker, d. h. der Schwinge 42, eine Kippvorrichtung 44, durch die die Fahrerplattform 20 aus ihrer auf dem Fahrzeug 10 aufgesetzten Ausgangsposition (in Fig. 2 mit durchgezogenen Linien dargestellt) über Zwischenstellungen (unterbrochene Linien) in eine gekippte Endstellung 48 gebracht werden kann. Um die Fahrerplattform 20 zu kippen, muß der Kraftmotor 34 ausgefahren werden. Dadurch bewegt sich der Hubarm 30 entlang der unterbrochen dargestellten Linie 60 in seine obere Endstellung 40. Die an ihn angelenkte Fahrerplattform 20 wird dadurch ebenfalls angehoben. Da die Fahrerplattform 20 über die Schwinge 42 mit konstanter Länge am Fahrzeugrumpf 36 angelenkt ist, führt die Fahrerplattform 20 eine Kippbewegung, um eine imaginäre Kippachse aus. Die Lage dieser Kippachse ergibt sich aus der Geometrie der Einzelteile der Kippvorrichtung 44, das heißt aus den Anlenkpunkten und Längen des Hubarms 30, der Schwinge 42 und der Strebe 52.

In Fig. 2 sind neben der Ausgangsstellung und der endgültigen Kippstellung 48 der Fahrerplattform 20 mehrere Zwischenstellungen 39 in unterbrochenen Linien dargestellt. Beim Kippen verschwenken die Hubarme 30 und die Schwingen 42 um ihre jeweiligen Anlenkstellen mit dem Fahrzeugrumpf 36. Beim Kippen bewegt sich die Anlenkstelle 54 zwischen Strebe 52 und Hubarm 30 auf einer Kreisbahn 64, deren Mittelpunkt die Achse der Hubwelle 32 bildet. Die Anlenkstelle 56 zwischen der Strebe 52 und der Schwinge 42 bewegt sich auf einer Kreisbahn 66, deren Mittelpunkt die Gelenkstelle der Schwinge 42 an dem Fahrzeugrumpf 46 bildet. Da der Abstand der beiden genannten Anlenkstellen 54, 56 konstant bleibt, ergibt sich für die Fahrerplattform 20 eine überlagerte Translationsbewegung (schräg nach oben und hinten) und Kippbewegung, bei der sich der hintere Punkt des Rahmens der Fahrerplattform entlang der Kurve 62 bewegt.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die ebenfalls vom Schritzbereich der Ansprüche umfasst sind.

## Patentansprüche

1. Landwirtschaftliches oder industrielles Arbeitsfahrzeug mit einem Fahrzeugrumpf (36), einer Fahrerplattform (20) und wenigstens einer Kippvorrichtung (44), durch die die Fahrerplattform (20) auf dem Arbeitsfahrzeug (10) um eine im wesentlichen horizontale Kippachse verkippbar ist und die wenigstens zwei unterschiedlich lange und/oder nicht parallel ausgerichtete Lenker (30, 42) aufweist, die jeweils einenends an der Fahrerplattform (20) und anderenends an dem Fahrzeugrumpf (36) angelenkt sind, wobei die jeweiligen Anlenkachsen der Lenker (30, 42) im wesentlichen parallel miteinander ausgerichtet und zueinander beabstandet sind, wobei das Fahrzeug (10) wenigstens einen am Fahrzeugrumpf (36) angelenkten Hubarm (30) zur Betätigung einer Anbauvorrichtung (28) aufweist und wobei der Hubarm (30) zusätzlich als ein erster Lenker dient, **dadurch gekennzeichnet, daß** der Hubarm (30) und der Lenker (42) jeweils eine Anlenkstelle (54/56) aufweisen, über die sie an der Fahrerplattform (20) oder an einem an der Fahrerplattform (20) befestigten Bauteil (52) angelenkt sind.

2. Arbeitsfahrzeug nach Anspruch 1, **dadurch gekennzeichnet, daß** an dem Fahrzeugrumpf (36), an wenigstens einem der Lenker (30, 42), und/oder an der Fahrerplattform (20) wenigstens ein Kraftmotor (34) zum Kippen der Fahrerplattform (20) angreift.

3. Arbeitsfahrzeug nach Anspruch 2, **dadurch gekennzeichnet, daß** der Kraftmotor (34) einenends an dem Fahrzeugrumpf (36) und anderenends an dem Hubarm (30) angreift.

4. Arbeitsfahrzeug nach Anspruch 2 oder 3, **dadurch gekennzeichnet, daß** der Kraftmotor (34) ein einfach oder doppeltwirkender Hydraulikmotor ist.

5. Arbeitsfahrzeug nach einem der Ansprüche 2 bis 4, **dadurch gekennzeichnet, daß** die Anlenkstelle (54) zwischen Kraftmotor (34) und Hubarm (30) sowie die Anlenkstelle (54) zwischen Fahrerplattform (20) und Hubarm (30) miteinander fluchtende Anlenkachsen aufweisen.

6. Arbeitsfahrzeug nach Anspruch 5, **dadurch gekennzeichnet, daß** der Hubarm (30) sowie der Kraftmotor (34) bzw. Hydraulikmotor mittels eines gemeinsame Befestigungselements an der Fahrerplattform (20) angelenkt sind.

7. Arbeitsfahrzeug nach einem der Ansprüche 1 bis 6, **dadurch gekennzeichnet, daß** an dem freien Ende des Hubarms (30) eine Hubstrebe oder Hubspindel angelenkt ist, welche dem Anheben von Unterlenkern dient, und daß sich in einem mittleren Bereich des Hubarms (30) die Anlenkstelle (54) für die Fahrerplattform (20) befindet.

8. Arbeitsfahrzeug nach einem der Ansprüche 1 bis 7, **dadurch gekennzeichnet, daß** an der Fahrerplattform (20) eine von dieser abstehende sich im wesentlichen horizontal erstreckende Strebe (52) befestigt ist, und daß der Hubarm (30) im mittleren Bereich und der zweite Lenker (42) im Bereich des freien Endes der Strebe (52) angelenkt sind.

9. Arbeitsfahrzeug nach Anspruch 8, **dadurch gekennzeichnet, daß** die Strebe (52) als Profilstange ausgebildet ist, die in ein entsprechend ausgebildetes Profilelement eines Rahmenteils den Fahrerplattform (20) eingesteckt und an diesem befestigt ist.

10. Arbeitsfahrzeug nach einem der Ansprüche 1 bis 9, **dadurch gekennzeichnet, daß** an dem Arbeitsfahrzeug (10) zwei im wesentlichen gleiche Kippvorrichtungen vorgesehen sind, und daß entsprechende Anlenkachsen der Kippvorrichtungen miteinander fluchten.

11. Kippvorrichtung für eine Fahrerplattform eines landwirtschaftlichen oder industriellen Arbeitsfahrzeugs nach einem der Anprüche 1 bis 10, wobei die Kippvorrichtung mindestens eine starr mit der Fahrerplattform (20) verbindbare Strebe (52) im Sinn einer Gelenkverbindung (56) und einen Lenker (42) aufweist, wobei an der Strebe (52) Mittel zur Anlenkung eines Kraftmotors (34) und Mittel zur Anlenkung eines am Fahrzeugrumpf (20) verschwenkbar angeordneten Hubarms (30) vorgesehen sind **dadurch gekennzeichnet, daß** der Lenker (42) mit der Strebe (52) drehbar um eine an Lenker (42) und Strebe (52) ortsfest angeordnete Anlenkachse verbunden ist.

12. Kippvorrichtung nach Anspruch 11, **dadurch gekennzeichnet, daß** der Kraftmotor (34) und der Hubarm (30) Bestandteile einer am Arbeitsfahrzeug anbringbaren Anbauvorrichtung (28) sind.

13. Kippvorrichtung nach Anspruch 11 oder 12, **dadurch gekennzeichnet, daß** die Strebe (52) als Profilstange ausgebildet ist, die in ein entsprechend ausgebildetes Profilelement eines Rahmenteils der Fahrerplattform (20) einsteckbar und an diesem befestigbar ist.

14. Kippvorrichtung nach einem der Ansprüche 11 bis 13, **dadurch gekennzeichnet daß** der Lenker (42) mit einem Ende der Strebe (52) verbunden ist und daß die Mittel zur Anlenkung des Kraftmotors (34) und des Hubarms (30) in einem mittleren Bereich der Strebe (52) vorgesehen sind.

## Claims

1. Agricultural or industrial working vehicle, having a vehicle body (36), an operator platform (20) and at least one tilting device (44), by means of which the operator platform (20) on the working vehicle (10) can be tilted about an essentially horizontal tilt axis and which device has at least two guide rods (30, 42) which are of different lengths and/or not aligned parallel and are articulated respectively at one end on the vehicle platform (20) and at the other end on the vehicle body (36), the respective articulation axes of the guide rods (30, 42) being aligned essentially parallel to each other and at a spacing from each other, the vehicle (10) having at least one lifting arm (30) which is articulated on the vehicle body (36) for actuating a hitch (28) and the lifting arm (30) serving in addition as a first guide rod, **characterised in that** the lifting arm (30) and the guide rod (42) respectively have an articulation position (54, 56), via which they are articulated on the operator platform (20) or on a component (52) which is mounted on the operator platform (20).

2. Working vehicle according to claim 1, **characterised in that**, on the vehicle body (36), at least one power motor (34) for tilting the operator platform (20) engages on at least one of the guide rods (30, 42) and/or on the operator platform (20).

3. Working vehicle according to claim 2, **characterised in that** the power motor (34) engages at one end on the vehicle body (36) and at the other end on the lifting arm (30).

4. Working vehicle according to claim 2 or 3, **characterised in that** the power motor (34) is a single- or double-acting hydraulic motor.

5. Working vehicle according to one of the claims 2 to 4, **characterised in that** the articulation position (54) between power motor (34) and lifting arm (30) and the articulation position (54) between operator platform (20) and lifting arm (30) have articulation axes which are aligned with each other.

6. Working vehicle according to claim 5, **characterised in that** the lifting arm (30) and the power motor (34) or hydraulic motor are articulated by means of a common mounting element on the operator platform (20).

7. Working vehicle according to one of the claims 1 to 6, **characterised in that** a lifting strut or lifting spindle is articulated on the free end of the lifting arm (30) and serves for lifting lower guide rods, and **in that** the articulation position (54) for the operator platform (20) is situated in a central region of the lifting arm (30).

8. Working vehicle according to one of the claims 1 to 7, **characterised in that**, on the operator platform (20), an essentially horizontally extending strut (52) which protrudes from the latter is mounted, and **in that** the lifting arm (30) is articulated in the central region and the second guide rod (42) in the region of the free end of the strut (52).

9. Working vehicle according to claim 8, **characterised in that** the strut (52) is configured as a profile bar, which is inserted into a correspondingly configured profile element of a frame part of the operator platform (2) and is mounted on the latter.

10. Working vehicle according to one of the claims 1 to 9, **characterised in that**, on the working vehicle (10), two essentially identical tilting devices are provided, and **in that** corresponding articulation axes of the tilting devices are aligned with each other.

11. Tilting device for an operator platform of an agricultural or industrial working vehicle according to one of the claims 1 to 10, the tilting device having at least one strut (52), which can be connected rigidly to the operator platform (20), and a guide rod (42), means for articulating a power motor (34) and means for articulating a lifting arm (30), which is disposed pivotably on the vehicle body (20), being provided on the strut (52), **characterised in that** the guide rod (42) is connected to the strut (52) in the sense of an articulation joint (56) able to rotate about an articulation axis which is disposed in a stationary manner on guide rod (42) and strut (52).

12. Tilting device according to claim 11, **characterised in that** the power motor (34) and the lifting arm (30) are components of a hitch (28) which can be mounted on the working vehicle.

13. Tilting device according to claim 11 or 12, **characterised in that** the strut (52) is configured as a profile bar which can be inserted into a correspondingly configured profile element of a frame part of the operator platform (20) and can be mounted on the latter.

14. Tilting device according to one of the claims 11 to 13, **characterised in that** the guide rod (42) is connected to one end of the strut (52), and **in that** the means for articulating the power motor (34) and the lifting arm (30) are provided in a central region of the strut (52).

## Revendications

1. Véhicule utilitaire agricole ou industriel comportant un corps de véhicule (36), une plate-forme de conduite (20) et au moins un mécanisme de basculement (44) au moyen duquel la plate-forme de conduite (20) peut être basculée sur le véhicule utilitaire (10) autour d'un axe de basculement horizontal pour l'essentiel et qui comporte au moins deux bielles (30, 42) de longueur différente et/ou orientées de manière non parallèle, bielles qui sont articulées d'un côté sur la plate-forme de conduite (20) et de l'autre côté sur le corps de véhicule (36), les axes d'articulation respectifs des bielles (30, 42) étant orientés de manière essentiellement parallèle l'un par rapport à l'autre et placés à distance l'un de l'autre, le véhicule (10) comportant au moins un bras de levage (30), articulé sur le corps de véhicule (36) pour l'actionnement d'un dispositif d'attelage (28) et le bras de levage (30) servant en outre de première bielle, **caractérisé en ce que** le bras de levage (30) et la bielle (42) comportent un point d'articulation (54, 56) par le biais duquel ils sont articulés sur la plate-forme de conduite (20) ou sur une pièce (52) fixée sur la plate-forme de conduite (20).

2. Véhicule utilitaire selon la revendication 1, **caractérisé en ce qu'**au moins un moteur (34) intervient sur le corps de véhicule (36), au niveau d'au moins l'une des bielles (30, 42), et/ou sur la plate-forme de conduite (20) pour basculer la plate-forme de conduite (20).

3. Véhicule utilitaire selon la revendication 2, **caractérisé en ce que** le moteur (34) intervient d'un côté sur le corps de véhicule (36) et de l'autre côté sur le bras de levage (30).

4. Véhicule utilitaire selon la revendication 2 ou 3, **caractérisé en ce que** le moteur (34) est un moteur hydraulique à simple ou double effet.

5. Véhicule utilitaire selon l'une quelconque des revendications 2 à 4, **caractérisé en ce que** le point d'articulation (54) entre le moteur (34) et le bras de levage (30) ainsi que le point d'articulation (54) entre la plate-forme de conduite (20) et le bras de levage (30) comportent des axes d'articulation alignés.

6. Véhicule utilitaire selon la revendication 5, **caractérisé en ce que** le bras de levage (30) ainsi que le moteur (34) ou le moteur hydraulique sont articulés sur la plate-forme de conduite (20) au moyen d'un élément de fixation commun.

7. Véhicule utilitaire selon l'une quelconque des revendications 1 à 6, **caractérisé en ce que**, sur l'extrémité libre du bras de levage (30), est articulée une tige ou une vis de levage, laquelle sert au levage de bielles inférieures et **en ce que** le point d'articulation (54), pour la plate-forme de conduite (20), se trouve dans une zone médiane du bras de levage (30).

8. Véhicule utilitaire selon l'une quelconque des revendications 1 à 7, **caractérisé en ce qu'**est fixée sur la plate-forme de conduite (20) une tige (52), s'étendant à l'horizontale pour l'essentiel, s'éloignant de celle-ci, et **en ce que** le bras de levage (30) est articulé dans la zone médiane et la seconde bielle (42) est articulée au niveau de l'extrémité libre de la tige (52).

9. Véhicule utilitaire selon la revendication 8, **caractérisé en ce que** la tige (52) est réalisée sous la forme d'une barre profilée qui est enfoncée dans un élément profilé réalisé de manière correspondante d'une partie de châssis de la plate-forme de conduite (20) et fixée à celui-ci.

10. Véhicule utilitaire selon l'une quelconque des revendications 1 à 9, **caractérisé en ce que** deux mécanismes de basculement identiques pour l'essentiel sont prévus sur le véhicule utilitaire (10) et **en ce que** des axes d'articulation correspondants des mécanismes de basculement sont alignés.

11. Mécanisme de basculement pour une plate-forme de conduite d'un véhicule utilitaire agricole ou industriel selon l'une quelconque des revendications 1 à 10, le mécanisme de basculement comportant au moins une tige (52) raccordable de manière rigide à la plate-forme de conduite (20) et une bielle (42), un moyen d'articulation d'un moteur (34) et un moyen d'articulation d'un bras de levage (30) disposé de manière pivotante sur le corps du véhicule (36) étant prévus sur la tige (52), **caractérisé en ce que** la bielle (42) est raccordée à la tige (52) de manière à pouvoir tourner, dans l'esprit d'une liaison articulée (56), autour d'un axe d'articulation, disposé de manière fixe sur la bielle (42) et la tige (52).

12. Mécanisme de basculement selon la revendication 11, **caractérisé en ce que** le moteur (34) et le bras de levage (30) font partie intégrante d'un mécanisme d'attelage pouvant être fixé sur le véhicule utilitaire.

13. Mécanisme de basculement selon la revendication 11 ou 12, **caractérisé en ce que** la tige (52) est réalisée sous la forme d'une barre profilée qui peut être enfoncée dans un élément profilé, réalisé de manière correspondante, d'une partie de châssis de la plate-forme de conduite (20) et fixée à cet élément.

14. Mécanisme de basculement selon l'une quelconque des revendications 11 à 13, **caractérisé en ce que** la bielle (42) est raccordée à une extrémité de la tige (52) et **en ce que** les moyens d'articulation du moteur (34) et du bras de levage (30) sont prévus dans une zone médiane de la tige (52).
